# EUROPÄISCHE PATENTANMELDUNG

(11) **EP 0 712 751 A1**
(43) Veröffentlichungstag der Anmeldung: **22.05.1996**
(21) Anmeldenummer: 95810712.0
(22) Anmeldetag: 14.11.1995
(51) Int. Cl.: B60J 11/00, A01M 29/00

(54) **Schutzhülle**

(30) Priorität: 17.11.1994 SE 9403456
(71) Anmelder: Untersee, Stefan, CH-7516 Maloja (CH)
(72) Erfinder: Untersee, Stefan, CH-7516 Maloja (CH)
(74) Vertreter: Patentanwälte Breiter + Wiedmer AG

(57) **Zusammenfassung**

Falt- und/oder rollbare Schutzhüllen (12) bieten Land-, Luft- und Wasserfahrzeugen, insbesondere Booten (10), und anderen im Freien abgestellten bzw. schwimmenden, empfindlichen mobilen Objekten Schutz gegen Witterungseinflüsse. Die ausgebreitet aufliegende Schutzhülle (12) hat wenigstens an ihren exponierten Stellen einen integrierten stachelförmigen Vogelschutz. Dadurch wird die lästige Kotbeschmutzung verhindert oder auf ein Minimum reduziert. Besonders vorteilhaft sind entfernbare Stachelbänder.

## Beschreibung

Die Erfindung bezieht sich auf eine falt- und/oder rollbare Schutzhülle für Land-, Luft- und Wasserfahrzeuge, insbesondere Boote, und andere im Freien abgestellte bzw. schwimmende, mobile Objekte, welche witterungsabhängig sind.

Eine stets wachsende Population von Vögeln, insbesondere Tauben und Möwen, hat in ästhetisch und hygienisch bedenklicher Weise mit Vogelkot verschmutzte Objekte zur Folge. Die Verschmutzung erfolgt insbesondere dort, wo Vögel problemlos anfliegen und sich niederlassen können. Besonders gefährdet sind exponierte Gebäudeteile wie Fenstersimse, Fassadengesimse, Brüstungen, abkragende Fensterrahmen, Stukkaturen, aber auch Skulpturen und ähnliche künstlerische Objekte oder Objektteile. Insbesondere schutzwürdige Objekte müssen periodisch mit grossem Aufwand wiederhergestellt werden, damit sie der Nachwelt einigermassen unverfälscht erhalten bleiben. In besonderem Masse gefährdet sind reich verzierte Natursteine, also auch der häufig künstlerisch bearbeitete Sandstein.

Gängige Steinsorten und Baumaterialien werden durch Vogelkot beschädigt, weil dieser eine biochemisch saure Zusammensetzung aufweist, welche die Oberfläche angreift. Dadurch werden Witterungseinflüsse multipliziert, bei Frösten können ganze Fassadenteile mit angegriffener Oberfläche abgesprengt werden.

Es ist seit längerer Zeit bekannt, an exponierten Stellen von Gebäuden und Gebäudeteilen einen Vogelschutz anzubringen, welcher das Anfliegen und insbesondere das Niederlassen von Vögeln verhindern soll. Dazu dienen beispielsweise gespannte Drähte und/oder das Anbringen von spitzen Gegenständen, beispielsweise von Stachelbändern. Ein solches Stachelband verfehlt seine Wirkung auf anfliegende Vögel nicht, diese verzichten auf eine Landung am anvisierten Ort, was eine dauernde Verschmutzung mit Kot verhindert.

Ein Stachelband in Form eines aufclipbaren Profils ist aus der EP,A2 0230736 bekannt. Diese vorzugsweise aus einem Kunststoff, wie Polyvinylchlorid oder Polypropylen, bestehenden Stachel bänder können mit entsprechenden Halterungen an allen exponierten Gebäudeteilen befestigt werden.

Die DE, A 1757735 beschreibt ihrerseits einen Vogelschutz mit verbesserter Bauweise, welcher einen langgestreckten, schmalen und leicht biegsamen Basisteil aus Plastik umfasst und überall angebracht werden kann. Kurze, eng angeordnete Stacheln sollen die Verletzungsgefahr von Vögeln vermindern.

Fahrzeuge, insbesondere vertäute Boote, und andere im Freien abgestellte empfindliche Objekte, welche nicht einsehbar sein müssen, werden häufig durch Ueberziehen mit einer Schutzhülle abgedeckt und so nicht nur vor Kotbefall geschützt, sondern auch Witterungseinflüssen entzogen. Wird das Boot oder das Fahrzeug benutzt, so muss vorerst die Schutzhülle abgehoben, zusammengerollt und/oder -gefaltet werden. Lästige Kotspuren müssen an Ort und Stelle wenigstens grob abgewaschen oder abgebürstet werden. Diese mühsame und unappetitliche Arbeit ist im Hinblick auf ein Falten und/oder Rollen der Schutzhülle unvermeidbar.

Wie bei Gebäuden werden Schutzhüllen vorwiegend an exponierten Kanten und Ecken verschmutzt, wo Vögel gut anfliegen und landen können. Kanten und Ecken sind hier in erweitertem Sinne zu verstehen, auch wenn sie stark abgerundet sind. Konstruktive Massnahmen zum Vogelschutz wie bei Gebäuden sind jedoch bei Schutzhüllen ungeeignet, weil diese einesteils oft entfernt und wieder aufgelegt werden müssen und andererseits das Falten und/oder Rollen von Schutzhüllen durch Stacheln erschwert oder wegen Durchstichgefahr sogar verunmöglicht wird.

Der vorliegenden Erfindung liegt die Aufgabe zugrunde, eine Schutzhülle der eingangs genannten Art zu schaffen, welche im Freien weitgehend ohne Kotspuren von Vögeln bleibt und nach dem Entfernen problemlos gefaltet und/oder gerollt werden kann.

Die Aufgabe wird erfindungsgemäss dadurch gelöst, dass die ausgebreitet aufliegende Schutzhülle wenigstens an ihren exponierten Stellen einen integrierten stachelförmigen Vogelschutz aufweist. Spezielle und weiterbildende Ausführungsformen der Erfindung sind Gegenstand von abhängigen Patentansprüchen.

Unter exponierten Stellen werden hier freiliegende Flächen, Kanten und/oder Ecken verstanden, wobei diese selbstverständlich auch mehr oder weniger abgerundet sein können. Für den Anflug bevorzugen Vögel naturgemäss auch bei Schutzhüllen hoch gelegene, freiliegende Landestellen ohne Hindernisse. Eine Spitze, beispielsweise in Form eines Stachels, versperrt einem anfliegenden Vogel nicht nur einen Teil des Landeplatzes, sondern vermittelt auch ein Gefühl der Gefahr, der es auszuweichen gilt. Dennoch hat ein einzelner Stachel einen sehr begrenzten Wirkungskreis und ist nur bei einem sehr kleinen Landeplatz wirksam.

Bei grösseren Landeplätzen, insbesondere bei sich über die ganze Länge eines Bootes erstreckenden hohen Kanten von ausgebreitet aufliegenden Schutzhüllen, müssen in verhältnismässig kleinen Abständen Stacheln angeordnet werden, damit die gewünschte Wirkung erzielt wird. Da die Kanten von Schutzhüllen in der Praxis mehr oder weniger stark abgerundet sind, genügt in der Regel eine einzige Reihe von Stacheln nicht. Diese Stacheln müssen in einem bestimmten Abstand angeordnet sein, beispielsweise 3 bis 10 cm, insbesondere etwa 5 cm. Die Stacheln sind vorzugsweise spitz oder angeschrägt ausgebildet. In der Regel sind die Stacheln gleich lang und gerade. Sie können jedoch auch ungleich lang, abgewinkelt, verzweigt oder dgl. ausgebildet sein.

Falls die Stacheln bzw. das Stachelband unlösbar an der Schutzhülle befestigt sind, sind die Stacheln selbst elastisch biegbar, sonst könnte die Schutzhülle beim Falten und/oder Rollen beschädigt werden, sie wäre auch zu sperrig.

Wenigstens auf freiliegenden hohen Flächen, Kanten und/oder Ecken werden zweckmässig längslaufende, vorfabrizierte Stachelbänder angeordnet. Ein an sich bekanntes Stachelband hat einseitig angeordnete Stacheln, welche in mehreren, längslaufenden Reihen befestigt sind. Die etwa parallel verlaufenden Stacheln werden bei abgekanteter oder abgerundeter Unterfläche kranzförmig gespreizt. Es ist durchaus möglich, die ganze Schutzhülle oder massgebliche Teile davon mit Stacheln zu versehen. Diese Variante ist jedoch aufwendiger und bringt bezüglich des Vogelschutzes kaum wesentlich mehr.

Ein bevorzugt eingesetztes Stachelband umfasst zwei punkt-, linien- oder vollflächig miteinander verbundene, flächige Elemente. Das erste Element, Deckband genannt, ist im Bereich der hohen Kanten und Ecken mit der über den zu schützenden Gegenstand gelegten Hülle unlösbar verbunden. Dies erfolgt insbesondere durch Kleben, Nähen, Verschweissen und/ oder Vernieten. Das Deckband weist die notwendigen Mittel zur lösbaren Verbindung mit dem zweiten Element, Halterungsband genannt, mit abkragenden Stacheln auf, welches die ergänzenden Mittel zur Herstellung der lösbaren Verbindung aufweist. Das Halterungsband ist nach einer ersten Variante vorzugsweise von Stacheln mit einem flachen Kopf durchgriffen, welcher zwischen dem Deck- und dem Halterungsband festliegt. Nach einer zweiten Variante hat das Halterungsband einstückig ausgeformte Stacheln mit im Vergleich zum flexiblen Band hinreichender mechanischer Festigkeit. Einstückig mit dem Halterungsband ausgebildete Stacheln bestehen aus einem spritzbaren Kunststoff, beispielsweise aus Polyethylen oder Polypropylen. Ein Halterungsband durchgreifende Stacheln können aus einem beliebigen geeigneten Material bestehen, neben Kunststoff- sind auch Metallstacheln bevorzugt, welche durch den metallischen Glanz eine zusätzliche optische Wirkung verursachen können.

In der Regel ist das Stachelband oder dessen Deckband, wie bereits erwähnt, vollflächig mit dem zugeordneten Halterungsband verbunden. Selbstverständlich können nach einer speziellen Ausführungsform Deckband und Halterungsband nur zonenweise miteinander verbunden sein, sei dies in Form von Längsstreifen, Querstreifen, Flecken oder Punkten. Die Art der Verbindung ergibt sich vor allem aus dem Verbindungssystem und den mechanischen Anforderungen.

Ein bevorzugtes Verbindungssystem zwischen Stachelband und Schutzhülle bzw. zwischen Deckband und Halterungsband ist ein vorzugsweise vollflächiger Klettverschluss. In an sich bekannter Weise hat das eine Band einen Faserflausch, vorzugsweise das Deckband, das andere Band auf der von den Stacheln abgewandten Seite eine Hakenschicht. So kann das Halterungsband mit den Stacheln vor dem Falten und/ oder Rollen der Schutzhülle leicht entfernt und nach dem Auflegen der Schutzhülle ebenso leicht und sicher wieder befestigt werden.

Mit anderen, ebenfalls an sich bekannten Verfahren, kann das Halterungsband ebenfalls am Deckband befestigt werden, wobei dieses auch etwas grösser sein kann:
- punktförmig mit Druckknöpfen, Clip- oder Schnappverschlüssen,
- mit Haken und Oesen, gegebenenfalls auch mit Gummizug, oder
- linienförmig mit in Längsrichtung verlaufenden Reissverschlüssen.

Neben den genannten Beispielen kommen auch noch weitere an sich bekannte lösbare Befestigungsmethoden in Betracht, welche robust und einfach sind, die Schutzhülle nicht beschädigen und die erforderliche mechanische Festigkeit aufweisen. So können z.B. die Stacheln selbst als Teil der mechanischen Befestigung benützt werden, indem sie beispielsweise den Kopf eines Druckknopfes bilden.

Die Schutzhülle selbst ist üblicherweise eine mehrschichtige Plane aus einem an sich bekannten Verbundwerkstoff, welcher allen Witterungseinflüssen widersteht und dank wenigstens einer Gewebeschicht eine hohe mechanische Festigkeit aufweist. Die Schutzhülle kann jedoch auch aus einer vorzugsweise oberflächenbehandelten textilen Schutzschicht oder aus einer entsprechend festen Kunststoffschicht bestehen.

Mit der erfindungsgemässen Lösung ist ein einfacher, praktischer Vogelschutz für Schutzhüllen für Land-, Luft- und Wasserfahrzeuge, insbesondere Boote, und andere im Freien abgestellte, witterungsempfindliche Objekte realisiert, welcher das Falten und/oder Rollen nicht oder wenig behindert, weil er flexibel, mit elastischen Stacheln, ausgebildet ist und/oder mit einem oder wenigen Handgriffen entfernt werden kann. Das mühsame und unappetitliche Reinigen von Schutzhüllen, insbesondere vor einer Bootsfahrt, entfällt.

Die Erfindung wird anhand von in der Zeichnung dargestellten Ausführungsbeispielen, welche auch Gegenstand von abhängigen Ansprüchen sind, näher erläutert. Es zeigen schematisch:
- Fig. 1 eine perspektivische Darstellung eines Bootes mit Schutzhülle,
- Fig. 2 eine teilweise Ansicht einer Schutzhülle mit Vogelschutz,
- Fig. 3 eine Draufsicht auf ein Stachelband,
- Fig. 4 eine perspektivische Ansicht eines Stachelbandes, und
- Fig. 5 einen Schnitt durch ein auf einer hohen Kante angeordnetes Stachelband.

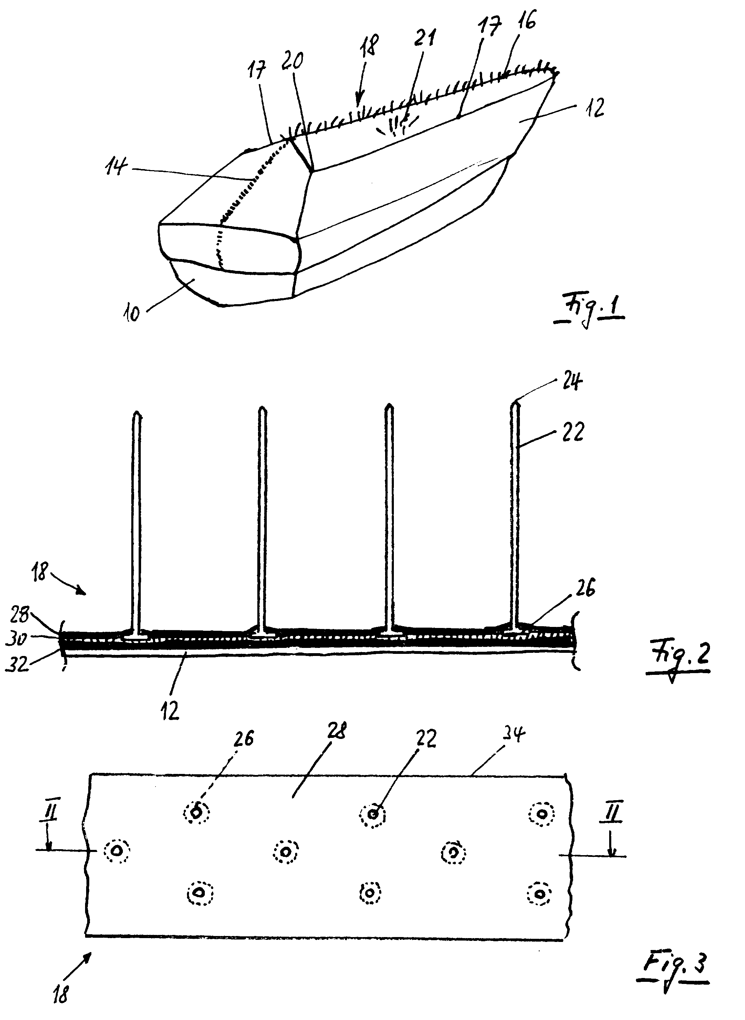

Ein in Fig. 1 dargestelltes Boot 10 ist mit einer Schutzhülle 12 aus einer Plane gegen Witterungseinflüsse abgedeckt. Die Schutzhülle 12 ist mit an sich bekannten Mitteln am Boot befestigt und mit einem Reissverschluss 14 verschlossen. Das Traggerippe für die Schutzhülle 12 ist so konzipiert, dass eine firstförmige hohe Kante 16 gebildet wird. Diese hohe Kante 16 bildet für Vögel einen optimalen Lande- und Aufenthaltsplatz mit leichtem Anflug. Vor dem Falten und/oder Rollen muss die Schutzhülle 12 in diesem Bereich stets von Vogelkot befreit werden.

Wie in Fig. 1 dargestellt, ist die hohe Kante 16 über ihre ganze Länge mit einem Stachelband 18 überzogen, welches in den folgenden Figuren im Detail dargestellt ist.

Je nach der geometrischen Gestaltung der Schutzhülle 12 und deren Traggerippe können weitere hohe Kanten 17, der Reissverschluss 14, Ecken 20 und/oder wenigstens Teile der Flächen 21 zwischen den Kanten 16,17 mit Stachelbändern 18 bestückt sein. Die Anordnung der Deckbänder bzw. unlösbaren Stachelbänder 18 kann schon bei der Herstellung der Schutzhülle 12 und/oder später erfolgen, auch stufenweise nach der Erprobung der Anfluggewohnheiten von sich niederlassenden Vögeln.

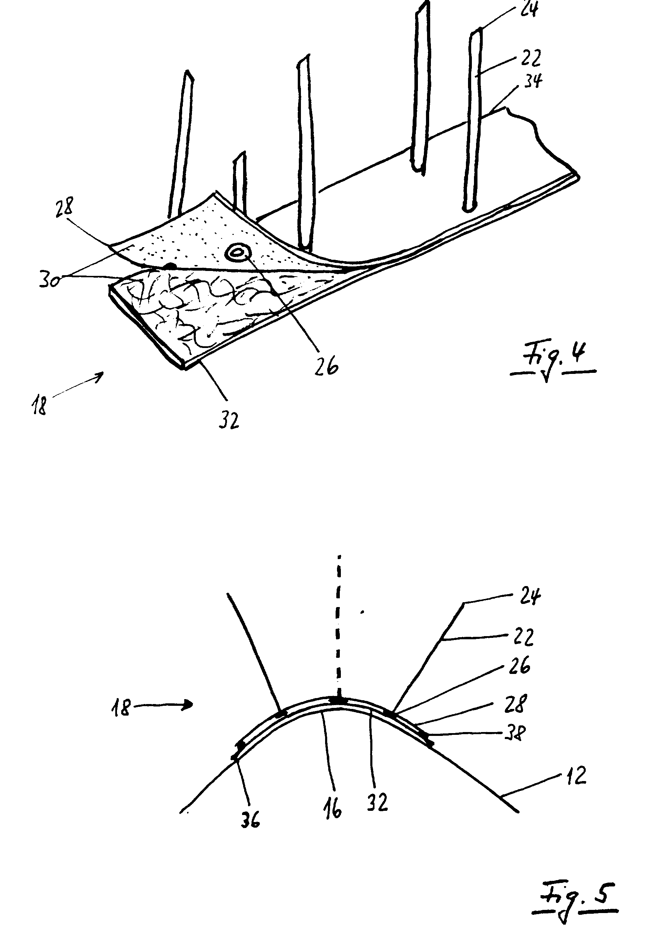

Fig. 2 zeigt einen Teilschnitt durch ein auf einer Schutzhülle 12 angeordnetes Stachelband 18 in dessen Längsrichtung II-II gemäss Fig. 3, einer Draufsicht auf ein Stachelband 18. Die Stacheln 22 sind nagelförmig ausgebildet, im vorliegenden Fall etwa 5 cm lang. Sie haben eine Spitze 24 und einen Kopf 26. Weiter durchstossen die Stacheln 22 ein Halterungsband 28, welches über einen abschälbaren Klettverschluss 30 mit einem Deckband 32 verbunden ist. Das letztere ist unlösbar mit der Schutzhülle 12 verklebt.

Die Stacheln 22 sind in idealer Position, rechtwinklig abkragend, gezeichnet. In Wirklichkeit sind die Stacheln nicht genau ausgerichtet, die Abweichung von der Vertikalen kann in allen Richtungen 10 bis 20° betragen, weil der Kopf 26 der Stacheln verhältnismässig locker zwischen den zwei textilen Bändern 28, 32 eingebettet ist.

In Fig. 3 ist ein Stachelband 18 mit drei Reihen von Stacheln 22 dargestellt, wobei die mittlere, in Fig. 2 dargestellte Reihe gegenüber den äusseren Reihen versetzt ist. Im vorliegenden Fall ist das Stachelband 18 etwa 5 cm breit, die äusseren Stachelreihen verlaufen etwa 1 cm vom Längsrand 34 entfernt, die mittlere Reihe verläuft in der Mitte des Halterungsbandes 28. In dessen Längsrichtung sind die Stacheln 22 etwa 6 cm voneinander entfernt.

Nicht dargestellte Stachelbänder können eine beliebige Anzahl von Stachelreihen enthalten, vorzugsweise sind jedoch drei bis fünf Stachelreihen ausgebildet. Selbstverständlich können auch andere geometrische Grundmuster für die Anordnung der Stacheln vorgesehen sein, aus fertigungstechnischen Gründen sind die Anordnungsbilder im Sinne von Fig. 3 jedoch mit Vorteil regelmässig. Länge und Abstand der Stacheln richten sich nach der Grösse der abzuwehrenden Vögel.

Eine Variante eines Halterungsbandes 28 hat einstückig mit dem Band ausgebildete Stacheln 22. Diese können sich bis in den Bereich der Spitze kontinuierlich leicht verjüngen.

Fig. 4 zeigt ein Stachelband 18 mit teilweise vom Deckband 32 abgeschältem Halterungsband 28. Der Klettverschluss 30 besteht aus einem am Halterungsband 28 befestigten Hakenband und einem am Deckband 32 befestigten Faserflausch. Selbstverständlich kann das Hakenband am Deckband 32 und der Faserflausch am Halterungsband 28 befestigt sein. Die Spitze 24 der Stacheln 22 ist durch Schrägflächen gebildet.

Im Querschnitt durch eine abgerundete hohe Kante 16 gemäss Fig. 5 ist in der senkrecht zum Zeichnungsblatt verlaufenden Längsrichtung ein Stachelband 18 aufgezogen. Das Deckband 32 ist mit zwei Längsnähten 36 unlösbar mit der Schutzhülle 12 verbunden. Im vorliegenden Fall ist das Halterungsband 28 über zahlreiche Druckknöpfe 38 aufgespannt und kann problemlos wieder entfernt werden. Die Stacheln 22 sind durch die Form der Unterlage kranzförmig auseinandergespreizt.

## Patentansprüche

1. Falt- und/oder rollbare Schutzhülle (12) für Land-, Luft- und Wasserfahrzeuge, insbesondere Boote (10), und andere im Freien abgestellte bzw. schwimmende, mobile Objekte, welche witterungsabhängig sind,
dadurch gekennzeichnet, dass
die ausgebreitet aufliegende Schutzhülle (12) wenigstens an ihren exponierten Stellen einen integrierten stachelförmigen Vogelschutz aufweist.

2. Schutzhülle (12) nach Anspruch 1, dadurch gekennzeichnet, dass im Bereich von freiliegenden hohen Kanten (16,17), des Reissverschlusses (14), Ecken (20) und/ oder wenigstens Teilen der Flächen (21) zwischen den Kanten (16,17) ein Vogelschutz, vorzugsweise wenigstens ein Stachelband (18), angeordnet ist.

3. Schutzhülle (12) nach Anspruch 1 oder 2, dadurch gekennzeichnet, dass das Stachelband (18) flexibel ausgebildet ist und sich mit der Schutzhülle (23) jeder Form der Unterlage anpasst.

4. Schutzhülle (12) nach einem der Ansprüche 1 bis 3, dadurch gekennzeichnet, dass ein auch einstückig ausgebildetes Stachelband (18) als ganzes entfernbar an der Schutzhülle (12) befestigt ist.

5. Schutzhülle (12) nach einem der Ansprüch 1 bis 3, dadurch gekennzeichnet, dass ein Stachelband (18) ein an der Hülle (12) unlösbar befestigtes Deckband (32) und ein lösbares Halterungsband (28) mit Stacheln (22) aufweist.

6. Schutzhülle (12) nach Anspruch 5, dadurch gekennzeichnet, dass die Stacheln (22) das Halterungsband (28) durchgreifen und einen Kopf (26) aufweisen, welcher zwischen dem Deckband (32) und dem Halterungsband (28) festliegt, oder das Halterungsband (28) und die Stacheln (32) einstückig ausgebildet sind.

7. Schutzhülle (12) nach einem der Ansprüch 4 bis 6, dadurch gekennzeichnet, dass das Stachelband (18) und die Schutzhülle (12) einerseits oder das Deckband (32) und das Halterungsband (28) andererseits vollflächig oder nur zonenweise miteinander verbunden sind, vorzugsweise mit einem Klettverschluss.

8. Schutzhülle (12) nach einem der Ansprüche 4 bis 7, dadurch gekennzeichnet, dass das Halterungsband (28) mit Druckknöpfen, Clip- oder Schnappverschlüssen am Deckband (32) oder das Stachelband (18) mit den gleichen Mitteln an der Schützhülle (12) befestigt ist.

9. Schutzhülle (12) nach Anspruch 8, dadurch gekennzeichnet, dass speziell ausgebildete Köpfe (26) von Stacheln (22) mit entsprechenden Gegenstücken im Deckband (32) den Verschluss bilden.

10. Schutzhülle (12) nach einem der Ansprüche 1 bis 9, dadurch gekennzeichnet, dass die Stacheln (22) elastisch biegbar sind.
